# EUROPEAN PATENT SPECIFICATION

(11) **EP 0 806 875 B1**
(45) Date of publication and mention of the grant of the patent: **27.03.2002**
(21) Application number: 97303196.6
(22) Date of filing: 09.05.1997
(51) Int. Cl.: H04N 9/31, H04N 9/28

(54) **Video image projector**
Videobildprojektor
Projecteur d'image vidéo

(30) Priority: 10.05.1996 JP 11597796
(43) Date of publication of application: 12.11.1997
(73) Proprietor: MATSUSHITA ELECTRIC INDUSTRIAL CO., LTD., Kadoma-shi, Osaka 571-0050 (JP)
(72) Inventor: Noda, Hitoshi, Moriguchi-shi, Osaka 570 (JP); Miyai, Hiroshi, Takarazuka-shi, Hyogo 665 (JP); Shiota, Tetsuro, Takatsuki-shi, Osaka 569 (JP)
(74) Representative: Crawford, Andrew Birkby

(56) References cited:
- US-A- 4 593 311
- PATENT ABSTRACTS OF JAPAN vol. 18, no. 286 (E [1556] , 31 May 1994 & JP 06 054335 A (CASIO)
- PATENT ABSTRACTS OF JAPAN vol. 18, no. 73 (E-1503), 7 February 1994 & JP 05 284444 A (CASIO COMPUT CO LTD)
- PATENT ABSTRACTS OF JAPAN vol. 15, no. 360 (P-1250), 11 September 1991 & JP 03 139622 A (MATSUSHITA)
- PATENT ABSTRACTS OF JAPAN vol. 17, no. 287 (E-1374), 2 June 1993 & JP 05 014843 A (NEC)
- PATENT ABSTRACTS OF JAPAN vol. 18, no. 532 (P-1810), 8 July 1994 & JP 06 186584 A (SANYO)

## Description

### FIELD OF THE INVENTION

The present invention relates to a video image projector whereby images displayed on a plurality of liquid crystal panels are projected on a screen.

### BACKGROUND OF THE INVENTION

In recent years, as a great variety of video equipment such as video cassette recorders, video disc players and the like and more video software becomes available, demands for large screen video image projectors have been increasing for enjoying powerful and impressive video pictures. Large screen video image projectors, such as projection type television receivers using CRTs as image displaying means have already been on the market for many years. When it comes to reducing dimensions of such display equipment, however, there are certain limits due to the physical bulkiness inherent in CRTs. In order to overcome the foregoing restriction in dimension and proceed with further reductions in the dimensions of display equipment, video image projectors employing liquid crystal display panels as image displaying means have been introduced to the market.

In general, a video image projector using liquid crystal panels employs three liquid crystal panels for red, green and blue colors to reproduce color pictures. This arrangement of liquid crystal panels requires an adjustment of convergence so that the images on the three liquid crystal display panels are focused at the same positions on the screen.

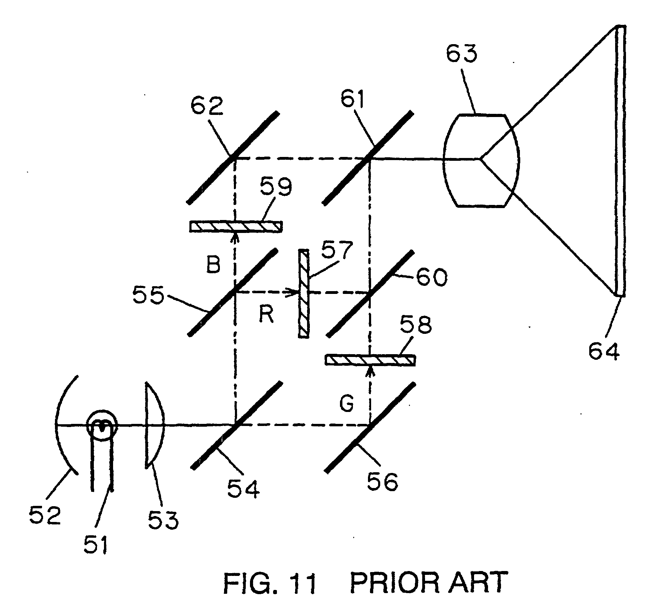

Fig. 11 is a diagram of a typical prior art video image projector using liquid crystal panels.

In Fig. 11, light radiated from a lamp 51, serving as a light source, and light reflected on a reflection mirror 52 are collected by a collection lens 53 and then separated into the three primary colors of red, green and blue by means of dichroic mirrors 54 and 55. The light corresponding to each respective primary color is directed on a liquid crystal panel 57 for red, liquid crystal panel 58 for green and liquid crystal panel 59 for blue. These three different colors from liquid crystal panels 57, 58 and 59 are put together by means of dichroic mirrors 60 and 61 for color composition and then projected on screen 64 by means of projection lens 63. Total reflection mirrors 56 and 62 are for changing the light paths.

Convergence adjustments, whereby images displayed on liquid crystal panels 57 for red, 58 for green and 59 for blue are combined on the screen 64, were performed in the past by a mechanical method of rotating adjustment screws and the like attached to liquid crystal panel supporting means (not shown in Fig. 11) that hold the liquid crystal panels 57, 58 and 59. In this way, an adjustment to the mounting positions of the liquid crystal panels while the video images projected on the screen 64 is observed was achieved to correct the convergence. An example of the convergence adjustment performed by a mechanical method is described in a Japanese Patent Laid Open No. Hei 5-236487, for example.

With a video image projector employing a convergence adjustment method whereby positions of liquid crystal panels are adjusted mechanically, the position of each respective liquid crystal panel needs to be adjusted in the vertical, horizontal and rotating directions, thus requiring a lot of time for adjustment In addition, when it comes to fixing the liquid crystal panels on the liquid crystal panel supporting means after completion of the position adjustments, the liquid crystal panels are subject to movement in position, thereby causing the problem of requiring the same adjustments to be conducted again.

JP-A-05284444 discloses an apparatus for addressing the convergence of a liquid crystal projector. in this projector, a real display area position may be adjusted with respect to the total display area of a liquid crystal panel by controlling the timing of the generation of a sampling start signal such that the image is effectively moved on the display. This can result in only part of the original picture being displayed on the actual display area such that an edge part of the original picture is missing.

### SUMMARY OF THE INVENTION

The present invention provides a video image projector, for displaying a video image on a liquid crystal panel for projection on a screen, comprising:
a liquid crystal panel, having a) a set of first pixels for displaying said video image at a first position on said liquid crystal panel and b) additional pixels; and
means (16R/G/B, 17R/G/B, 21R/G/B) for shifting the position of said video image displayed on said liquid crystal panel from the first position to a second position on said liquid crystal panel in at least one of a vertical direction and a horizontal direction from said set of first pixels to a different set of pixels including at least some of said additional pixels.

The present invention thus provides a video image projector employing a plurality of liquid crystal panels and enabling easy convergence adjustments, thereby realizing simplification in the adjustment process.

According to the foregoing structure, the positions of the images displayed on each respective liquid crystal panel for red, green and blue colors, each having redundant pixels, can be adjusted electrically and individually for each respective liquid crystal panel. Thus, enabling the convergence adjustment of the projected images to be performed electrically, rather than mechanically, in the horizontal scanning and vertical scanning directions of the images.

As will be appreciated from the foregoing the additional pixels forming part of this invention are extra to the minimum number of pixels required to display the complete image. In the following description these additional pixels are referred to as redundant pixels.

### BRIEF DESCRIPTION OF THE DRAWINGS

Fig. 1 is a schematic block diagram showing the structure of a liquid crystal panel used in a video image projector prepared according to an exemplary embodiment of the present invention.
Fig. 2 is a schematic block diagram showing the structure of a video image projector in a first exemplary embodiment of the present invention.
Figs. 3A and 3B are timing charts showing the image display timing in the horizontal scanning direction of a liquid crystal panel used in the foregoing video image projector.
Figs. 4A and 4B show diagrams explaining how the positions of images displayed on a liquid crystal panel used in the foregoing video image projector are shifted.
Figs. 5A and 5B show diagrams explaining how a convergence adjustment is performed in the vertical scanning direction of images displayed on a liquid crystal panel used in the foregoing video image projector.
Fig. 6 is a schematic block diagram showing the structure of a video image projector in a second exemplary embodiment of the present invention.
Fig. 7 is a schematic block diagram showing the structure of a timing shift circuit for red video signals used in the foregoing video image projector.
Figs. 8A and 8B are timing charts showing the image display timing in the horizontal scanning direction of a liquid crystal panel used in the foregoing video image projector.
Fig. 9 is a schematic block diagram showing the structure of a video image projector in a third exemplary embodiment of the present invention.
Fig. 10 is a schematic block diagram showing the structure of a video image projector in a fourth exemplary embodiment of the present invention.
Fig. 11 is schematic diagram showing the structure of a typical prior art video image projector.

### DESCRIPTION OF THE PREFERRED EMBODIMENTS

A video image projector of the present invention is an image display apparatus, whereby video images displayed on a plurality of liquid crystal panels are projected on a screen. The video image projector comprises liquid crystal panels with a redundant number of pixels including more than at least one pixel in each respective upward, downward, right and left directions when compared with the number of pixels normally required for image display on the foregoing liquid crystal panels and a control means for controlling vertical scanning and horizontal control signals that control image display vertically and horizontally, respectively, on the foregoing plurality of liquid crystal panels individually for each respective liquid crystal panel. Thus, being characterized by having the positions of video images displayed on the foregoing plurality of liquid crystal panels moved independently from one another at least one of the vertical and horizontal scanning directions and realizing an effect of simplification in the adjustment process because of easier convergence adjustments of the plurality of liquid crystal panels.

Further, a video image projector of the present invention is an image display apparatus, whereby video images displayed on a plurality of liquid crystal panels are projected on a screen, and comprises liquid crystal panels with a redundant number of pixels including more than at least one pixel in each respective upward, downward, right and left directions when compared with the number of pixels normally required for image display on the foregoing liquid crystal panels and a means for shifting the timing of video signals of the video images displayed on each respective liquid crystal panel independently from one another in at least one of the vertical scanning and horizontal scanning directions. Thus, being characterized by having the positions of video images displayed on the foregoing plurality of liquid crystal panels moved independently from one another at least in one of the vertical scanning and horizontal scanning directions and realizing an effect of simplification in the adjustment process because of easier convergence adjustments of the plurality of liquid crystal panels.

Still further, a video image projector of the present invention is an image display apparatus, whereby video images displayed on a plurality of liquid crystal panels are projected on a screen, and comprises liquid crystal panels with a redundant number of pixels including more than at least one pixel in each respective upward, downward, right and left directions when compared with the number of pixels normally required for image display on the foregoing liquid crystal panels, a means for moving the positions of video images displayed on the foregoing plurality of liquid crystal panels in the vertical scanning direction individually for each respective liquid crystal panel by controlling the vertical scanning control signals that control video images displayed on the foregoing plurality of liquid crystal panels in the vertical scanning direction and a means for moving the positions of video images displayed on the foregoing plurality of liquid crystal panels in the horizontal scanning direction individually for each respective liquid crystal panel of the foregoing plurality of liquid crystal panels by shifting the timing of video signals of the video images displayed on each respective liquid crystal panel of the foregoing plurality of liquid crystal panels independently from one another in the horizontal scanning direction. Thus, being characterized by having the positions of video images displayed on the foregoing plurality of liquid crystal panels moved independently from one another at least in one of the vertical scanning and horizontal scanning directions and realizing an effect of simplification in the adjustment process because of easier convergence adjustments of the plurality of liquid crystal panels.

Still further, a video image projector of the present invention is an image display apparatus, whereby video images displayed on a plurality of liquid crystal panels are projected on a screen, and comprises liquid crystal panels with a redundant number of pixels including more than at least one pixel in each respective upward, downward, right and left directions when compared with the number of pixels normally required for image display on the liquid crystal panels, a means for moving the positions of video images displayed on the liquid crystal panels horizontally and individually for each respective liquid crystal panel by controlling the horizontal scanning signals that control video images displayed on the plurality of liquid crystal panels in the horizontal scanning direction and a means for moving the positions of video images displayed on the plurality of liquid crystal panels in the vertical scanning direction individually for each respective liquid crystal panel by shifting the timing of video signals of the video images displayed on each respective liquid crystal panel independently from one another in the vertical scanning direction. Thus. being characterized by having the positions of video images displayed on the plurality of liquid crystal panels moved independently from one another at least in one of the vertical scanning and horizontal scanning directions and realizing an effect of simplification in the adjustment process because of easier convergence adjustments of the plurality of liquid crystal panels.

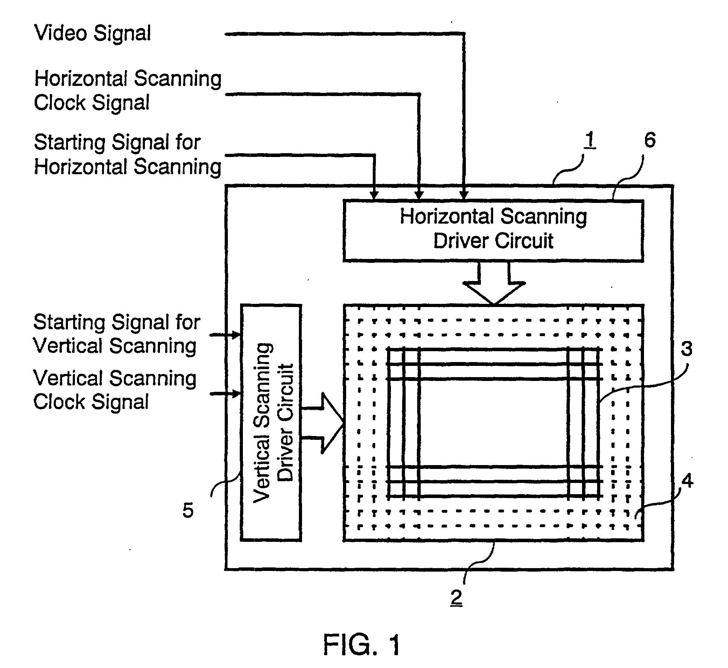

Next, an explanation will be made on some of the exemplary embodiments of the present invention with reference to Fig. 1 to Fig. 10.

### First exemplary embodiment

Fig. 1 is a schematic block diagram showing the structure of a liquid crystal panel used in a video image projector in a first exemplary embodiment of the present invention.

Video images can be displayed by means of pixels 2 disposed on a liquid crystal panel 1 with pixels for image display 3 usually serving as the pixels, whereby video images are displayed. The rest of the pixels 2 are redundancy pixels 4 where video images are possible for display but usually are not used for image display. Vertical scanning driver circuits 5 and horizontal scanning driver circuits 6 are for vertical and horizontal scanning of the image display 3, respectively. A general purpose liquid crystal panel has as many as 480 pixels (vertical) by 640 pixels (horizontal), for example. In Fig. 1, only a smaller number of pixels are shown for simplicity.

The number of pixels in the redundancy pixels 4, that surround the pixels for image display 3, are required to be more than one pixel in the horizontal and vertical directions. A case where three pixels are disposed in each respective direction is shown in Fig. 1 as an example. Also, the liquid crystal panel 1 has only a pair of the vertical scanning driver circuits 5 and horizontal scanning driver circuits 6 in Fig. 1. It is obvious, however, that there is no restriction in the number of pairs used and can therefore be a plurality of pairs.

The liquid crystal panel 1 used in the explanation that follows hereunder has pixels for image display 3 composed of 480 pixels (vertical) by 640 pixels (horizontal) and redundancy pixels 4 of three pixels on each respective side surrounding the pixels for image display 3. That is, upper side, lower side, right side and left side of the pixels for image display 3, with a resulting number of pixels 2 of the liquid crystal panel 1 being 486 pixels (vertical) by 646 pixels (horizontal) in total.

Displaying video images on the liquid crystal panel 1 is controlled in the horizontal scanning direction by horizontal scanning control signals from the horizontal scanning driver circuit 6 and in the vertical scanning direction by vertical scanning control signals from the vertical scanning driver circuit 5. The present exemplary embodiment deals with the case wherein starting signals for horizontal scanning and horizontal scanning clock signals are used as the horizontal scanning control signals and starting signals for vertical scanning and vertical scanning clock signals are used as the vertical scanning control signals.

Video image display on the liquid crystal panel 1 in the horizontal scanning direction is performed by the horizontal scanning clock signals that sample video image signals, with the starting signals for horizontal scanning serving as the reference signals. Video image display in the vertical scanning direction is performed by deciding on the positions of pixels in the vertical scanning direction, on which video image signals sampled by the horizontal scanning driver circuit 6 are written.

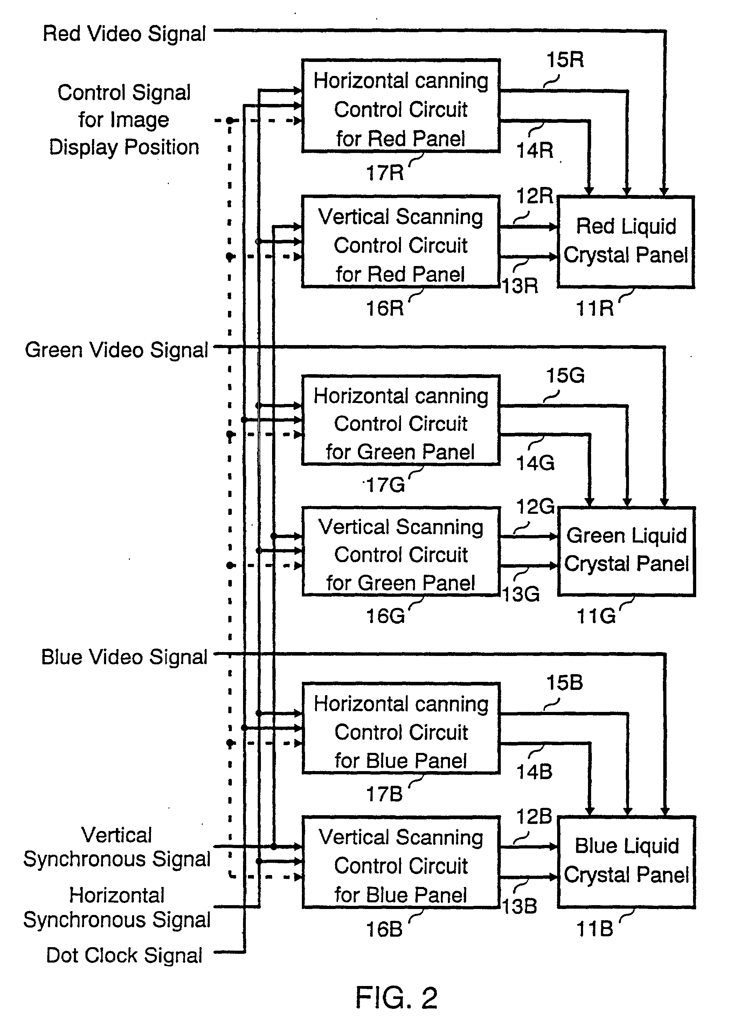

Fig. 2 is a schematic block diagram showing the structure of a video image projector in a first exemplary embodiment of the present invention. Reference symbols 11R, 11G and 11B indicate a red liquid crystal panel, green liquid crystal panel and blue liquid crystal panel, respectively. Reference symbols 12R, 12G and 12B indicate starting signals for vertical scanning to be applied to each respective liquid crystal panel. Reference symbols 13R, 13G and 13B indicate vertical scanning clock signals to be applied to each respective liquid crystal panel. Reference symbols 14R, 14G and 14B indicate starting signals for horizontal scanning to be applied to each respective liquid crystal panel. Reference symbols 15R 15G and 15B indicate horizontal scanning clock signals to be applied to each respective liquid crystal panel. Reference symbols 16R, 16G and 16B indicate vertical scanning control circuits for generating the starting signals for vertical scanning and vertical scanning clock signals to be applied to each respective liquid crystal panel. Reference symbols 17R, 17G and 17B indicate horizontal scanning control circuits for generating the starting signals for horizontal scanning and horizontal scanning clock signals to be applied to each respective liquid crystal panel.

The vertical scanning control circuit for red liquid crystal panel 16R is composed of counter circuits and the like and generates the starting signals for vertical scanning 12R and vertical scanning clock signals 13R for the red liquid crystal panel 11R. Vertical synchronous signals serve as the reference signals and horizontal synchronous signals are used as clock signals in order to vertically scan the red liquid crystal panel 11R. Also, the horizontal scanning control circuit for red liquid crystal panel 17R is composed of counter circuits, and the like, and generates the starting signals for horizontal scanning 14R and horizontal scanning clock signals 15R for the red liquid crystal panel 11R. The horizontal synchronous signals serve as the reference signals and dot chroic signals being used in order to horizontally scan the red liquid crystal panel 11R. Both the vertical scanning control circuit for red liquid crystal panel 16R and horizontal scanning control circuit for red liquid crystal panel 17R are controlled by control signals for image display position. According to setting values of the counter circuits, timing can be changed for the starting signals for vertical scanning 12R, vertical scanning clock signals 13R, starting signals for horizontal scanning 14R and horizontal scanning clock signals 15R that are generated from each respective circuit.

The control signals for image display position are data signals, whereby data are provided to counter circuits of each respective control circuit, and can be generated readily by a microcomputer and the like (not shown in Fig. 2).

The vertical scanning control circuit for green liquid crystal panel 16G, vertical scanning control circuit for blue liquid crystal panel 16B, horizontal scanning control circuit for green liquid crystal panel 17G and horizontal scanning control circuit for blue liquid crystal panel 17B perform the same way as the vertical scanning control circuit for red liquid crystal panel 16R and horizontal scanning control circuit for red liquid crystal panel 17R perform. Each respective timing of the starting signals for scanning and scanning clock signals that are generated from each respective control circuit can be changed independently, however, according to control signals for image display position.

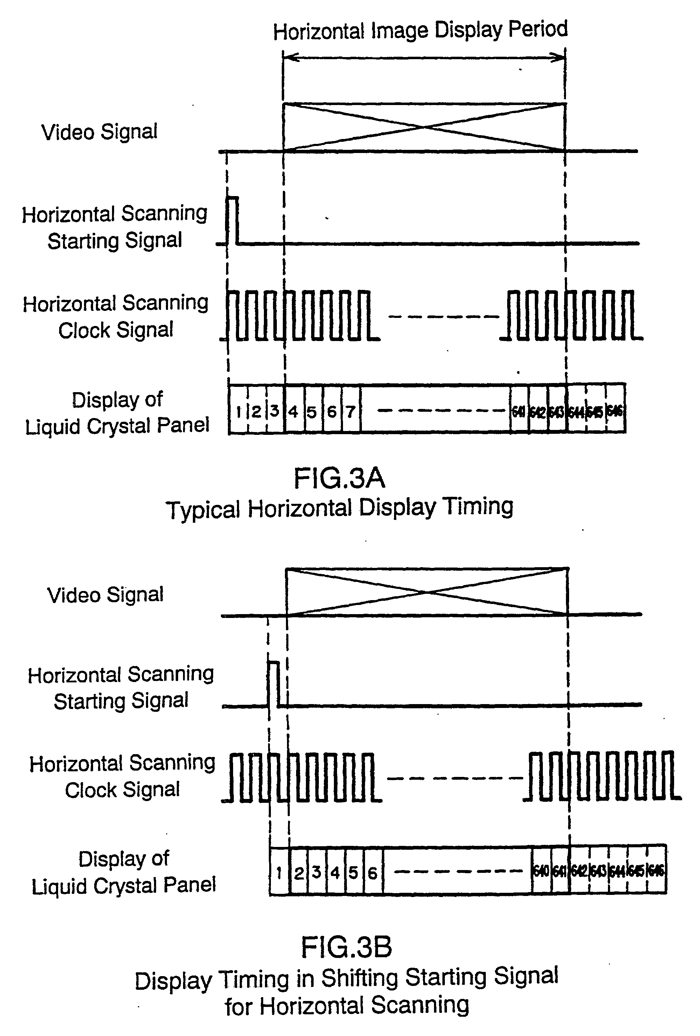

Figs. 3A and 3B show typical timing charts that describe image display timing in the horizontal scanning direction for a liquid crystal panel in order to explain how a video image projector performs in the first exemplary embodiment of the present invention. Fig. 3(A) is a timing chart to show typical display timing in the horizontal scanning direction. Video image display of a liquid crystal panel in the horizontal scanning direction is performed by inputting the starting signals for horizontal scanning and horizontal scanning clock signals that are generated in a horizontal scanning control circuit into a horizontal scanning driver circuit 6 of the liquid crystal panel 1. Upon receiving the starting signals for horizontal scanning, the horizontal scanning driver circuit 6 samples video image signals according to the horizontal scanning clock signals and video signals sequentially sampled are displayed on the pixels horizontally arranged on the liquid crystal panel 1. With the present exemplary embodiment, the liquid crystal panel 1 has 640 pixels in the horizontal direction as the pixels for image display 3 and three pixels each on the right side and left side of the pixels for image display 3 as the redundancy pixels 4, thus having 646 pixels horizontally in total as the pixels 2 of the liquid crystal panel 1. Therefore, as shown in Fig. 3(A), video image signals are applied in sequence to the pixels on the liquid crystal panel 1 starting from the 1st pixel and ending with the 646th pixel from the horizontal scanning driver circuit 6 according to the timing set by the starting signals for horizontal scanning and horizontal scanning clock signals. However, the pixels actually contributing to video image display are the pixels starting from the 4th pixel and ending with the 643rd pixel in the pixels for image display 3 counting 640 pixels in total with no video image displayed on the 1st to 3rd pixels 1st to 3rd and from the 644th to 646th pixels in the redundancy pixels 4. This can be readily practised by making the video image signals that correspond to the redundancy pixels 4 become signals for black color display according to blanking signals and the like.

On the other hand, Fig. 3(B) is a timing chart to show horizontal display timing when starting signals for horizontal scanning are shifted according to control signals for image display position. Fig. 3(B) describes the state wherein starting signals for horizontal scanning are delayed by a two clock period of the horizontal scanning clock signals from the timing of Fig. 3(A). In this state, video image signals are displayed on the 2nd pixel to the 641st pixel of the liquid crystal panel 1, but no video image signals are displayed on the 1st pixel and the 642nd pixel to the 646th pixel. In other words, according to the timing chart of Fig. 3(B) compared with the timing chart of Fig. 3(A), the positions, where video images are displayed, are shifted to the left by a two pixel distance since video images are displayed on the redundancy pixels 4 of the liquid crystal panel 1.

The display timing in the horizontal scanning direction only has been explained above and since the same applies to the display timing in the vertical scanning directions, a detailed description thereof is omitted.

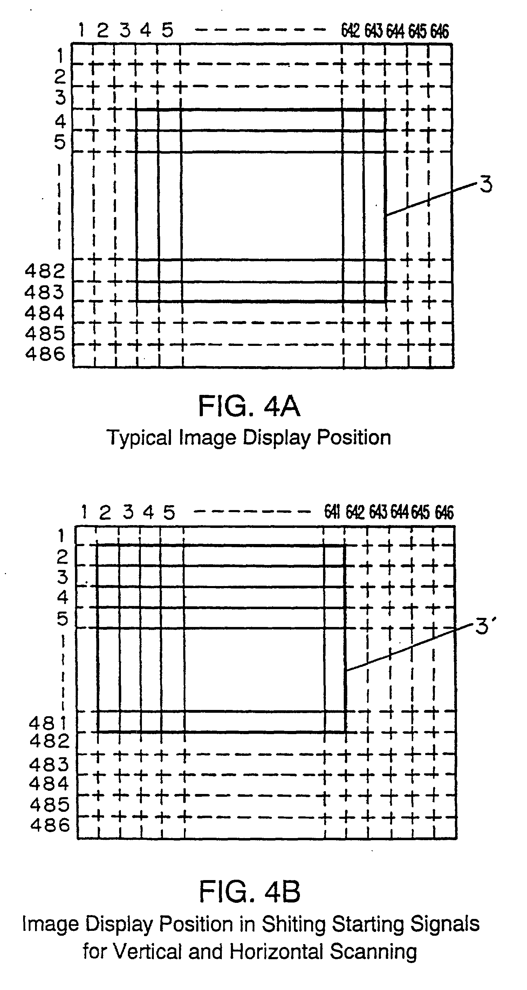

In order to supplement the foregoing description for easier understanding, Figs. 4A and 4B show diagrams to explain how the positions of video images displayed on a liquid crystal panel are moved by changing the timing of starting signals for vertical and horizontal scanning.

Fig. 4(A) shows the position of video images displayed on a liquid crystal panel when starting signals for vertical and horizontal scanning have typical standard timing. In this case, the pixels for image display 3 comprise the 4th pixel to the 643rd pixel in the horizontal scanning direction and the 4th pixel to the 483rd pixel in the vertical scanning direction. On the other hand, Fig. 4(B) shows the position of video images when starting signals for vertical and horizontal scanning are delayed by a two clock period from the typical standard timing, respectively. At this time, the pixels for image display 3 end up with shifting in the position thereof by 2 pixels upward in the vertical scanning direction and two pixels to the left in the horizontal scanning direction.

Thus, providing the pixels of the liquid crystal panel 1 with the redundancy pixels 4 in addition to the pixels for image display 3 allows the positions of video images displayed on the liquid crystal panel 1 to be set up freely by changing the timing of the starting signals for video scanning.

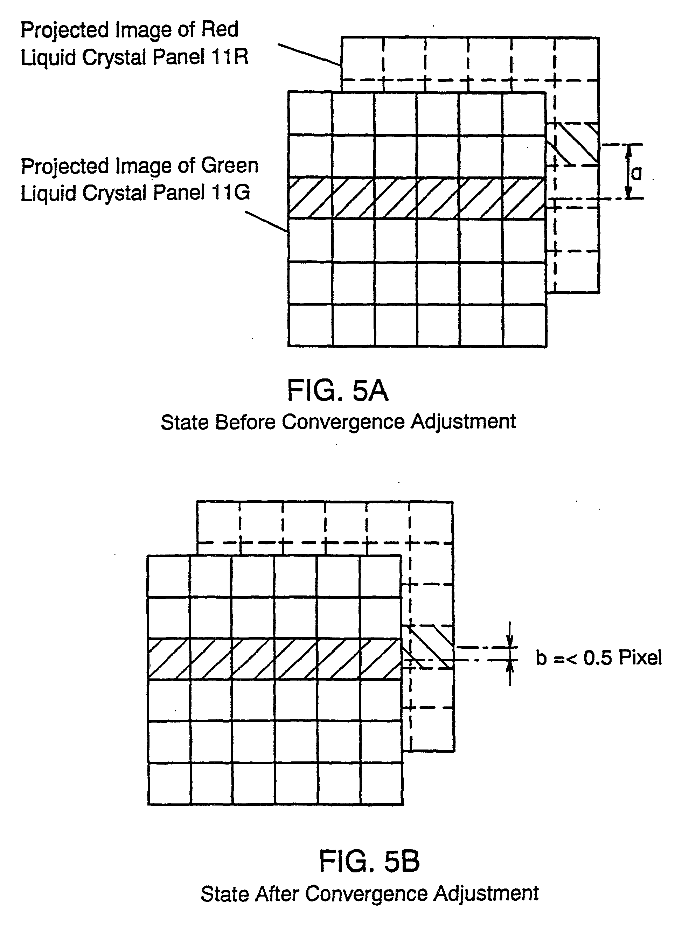

Figs. 5A and 5B show diagrams explaining how convergence adjustment is performed in the vertical direction for images displayed on a liquid crystal panel, for example, in order to describe how a video image projector in the first exemplary embodiment of the present invention performs. In Figs. 5A and 5B, how the convergence adjustment is performed is explained using two panels of the liquid crystal panel for red color 11R and liquid crystal panel for green color 11G for simplicity.

Fig. 5(A) shows part of projected video images of both the liquid crystal panel for red color 11R and liquid crystal panel for green color 11G before convergence adjustments, where the projected video images of red color and green color are moved in position from each other by an "a" pixel distance in the vertical scanning direction before convergence adjustments. Fig. 5(B) shows a diagram to describe the state wherein the pixels for image display of the liquid crystal panel for red color 11R have been shifted in the vertical scanning direction by shifting the starting signals for vertical scanning of the liquid crystal panel for red color 11R as explained above. Thus, by having the pixels for image display shifted, a difference in position between the projected video images of red color and the projected video images of green color in the vertical scanning direction can be adjusted to become a "b" pixel distance. Since the pixels for image display can be moved in position on a pixel-by-pixel basis, the difference "b" in position between the red projected video images and the green projected video images can be adjusted to less than 0.5 of one pixel. In the same way as above, the pixels for image display can be moved in position in the horizontal scanning direction and the difference in position between the red projected video images and the green projected video images can be adjusted to less than 0.5 of one pixel.

Thus, by allowing the positions of video images displayed on three liquid crystal panels of red, green and blue colors with redundancy pixels provided on each respective liquid crystal panel to be moved independently from one another by means of electrical adjustments, convergence adjustments of the projected video images can be conducted electrically, not mechanically, in both the horizontal and vertical scanning directions. As a result, such great effects as a simplification in adjustment systems, a reduction in adjustment steps and the like can be achieved.

### Second exemplary embodiment

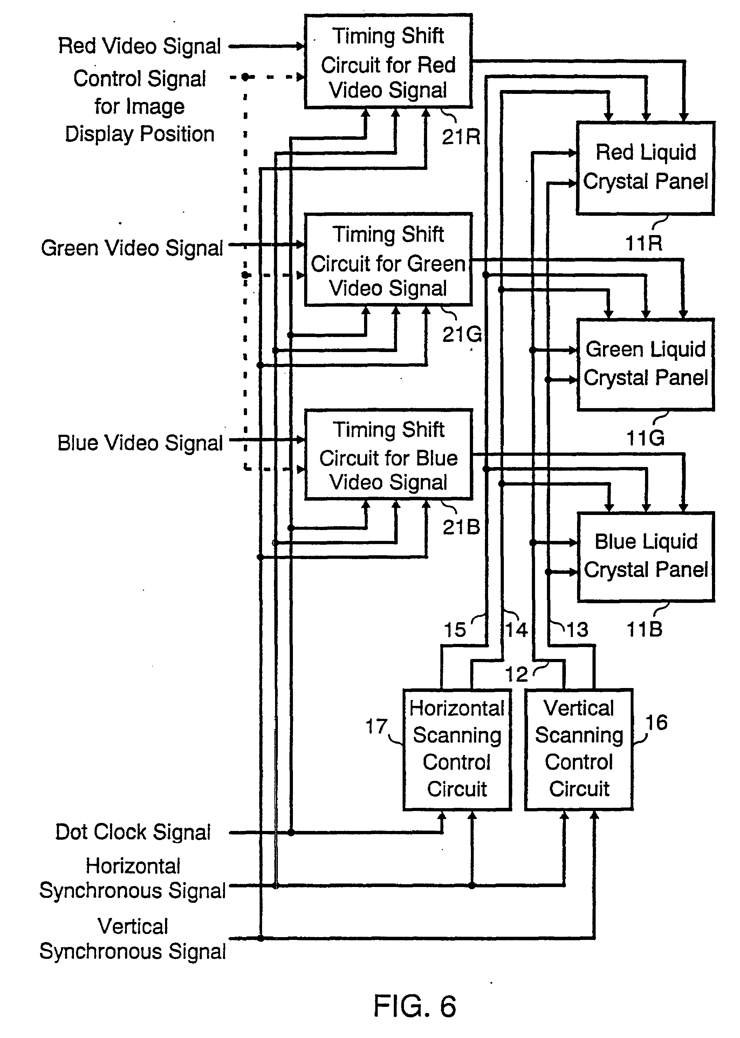

Fig. 6 is a schematic block diagram showing the structure of a video image projector in a second exemplary embodiment of the present invention Here, the same reference symbols as used in the first exemplary embodiment are used for the same components of the video image projector of the present exemplary embodiment and a detailed explanation of the reference symbols is omitted.

In Fig. 6, reference symbols 11R, 11G and 11B are a red liquid crystal panel, a green liquid crystal panel and a blue liquid crystal panel, respectively. Reference numeral 12 is starting signals for vertical scanning of liquid crystal panels 11R, 11G and 11B. Reference numeral 13 is vertical scanning clock signals for each respective liquid crystal panel. Reference numeral 14 is starting signals for horizontal scanning of liquid crystal panels 11R, 11G and 11B. Reference numeral 15 is horizontal scanning clock signals for each respective liquid crystal panel 11R, 11G and 11B. Reference numeral 16 is a vertical scanning control circuit to generate starting signals for vertical scanning and vertical scanning clock signals for liquid crystal panels 11R, 11G and 11B. Reference numeral 17 is a horizontal scanning control circuit to generate starting signals for horizontal scanning and horizontal scanning clock signals for liquid crystal panels 11R, 11G and 11B. Reference symbol 21R is a timing shift circuit for shifting the timing of the red video signal in the vertical and horizontal scanning directions. Reference symbol 21G is a timing shift circuit for shifting the timing of the green video signal in the vertical and horizontal scanning directions. Reference symbol 21B is a timing shift circuit for shifting the timing of the blue video signal in the vertical and horizontal scanning directions.

The vertical scanning control circuit 16 is composed of counter circuits and the like, and generates common starting signals for vertical scanning signals 12 and vertical scanning clock signals 13 with the vertical synchronous signal serving as the reference signal. The horizontal synchronous signal is used as the clock signal in order to vertically scan the liquid crystal panel 11R for red color, liquid crystal panel 11G for green color and liquid crystal panel 11B for blue color The horizontal scanning control circuit 17 is composed of counter circuits and the like, and generates common starting signals for horizontal scanning signals 14 and horizontal scanning clock signals 15 with the horizontal synchronous signal serving as the reference signal. The dot clock signal is used to horizontally scan the liquid crystal panel 11R for red color, liquid crystal panel 11G for green color and liquid crystal panel 11B for blue color. Here, the timing of the starting signals for vertical scanning signals 12 and vertical scanning clock signals 13 generated in the vertical scanning control circuit 16 and also the starting signals for horizontal scanning 14 and horizontal scanning clock signals 15 generated in the horizontal scanning control circuit 17 remain constant.

A timing shift circuit for red video signals 21R is composed of digital memory devices and the like, and shifts the timing of the red video signals in the vertical and horizontal scanning directions according to control signals for image display position. The control signals for image display position are data signals to provide data to counter circuits of each respective control circuit and can be generated easily by a micro-computer and the like. (The generating device is not shown in Fig. 6.). A timing shift circuit for green video signals 21G and timing shift circuit for blue video signals 21B perform the same way as the timing shift circuit for red video signals 21R. The timing of the video signals shifted by each respective circuit of the above can be varied, however, in an independent manner according to the control signals for image display position.

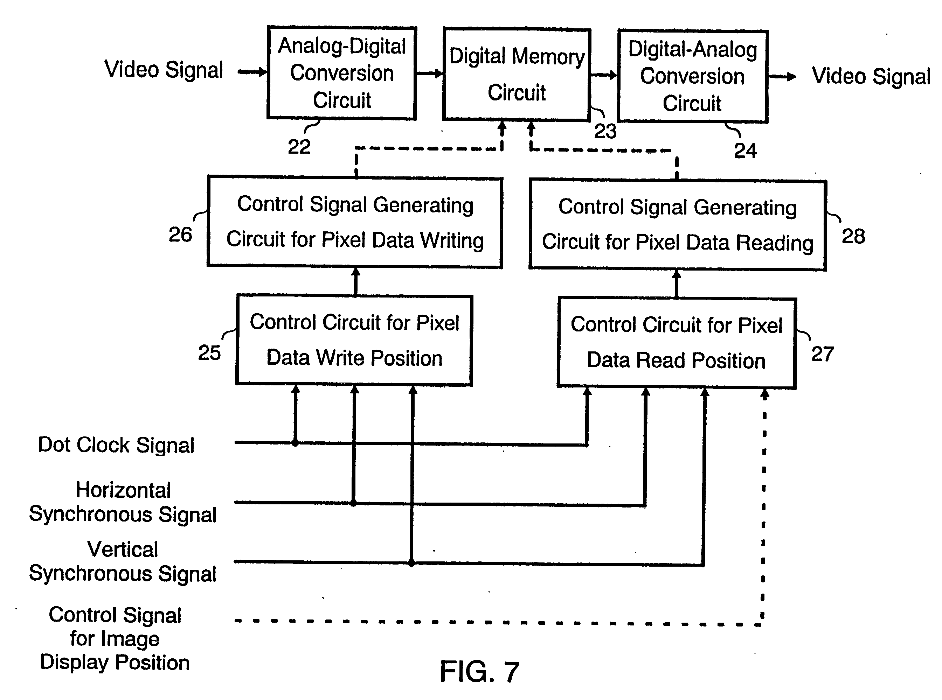

Fig. 7 is a schematic block diagram showing the structure of the timing shift circuit for red video signals 21R. Since the structure of the timing shift circuit for green video signals 21G and the structure of the timing shift circuit for blue video signals 21B are common to the structure of the timing shift circuit for red video signals 21R, an explanation thereof is omitted.

Analog input signals of video signals are converted into digital video data signals in an analog-digital conversion circuit 22 and input to a digital memory circuit 23. Since it is necessary to record more than a screenful of video data, flame memory devices are used in the digital memory circuit 23. The video data output from the digital memory circuit 23 are converted into analog video signals by a digital-analog conversion circuit 24.

A control circuit for pixel data write position 25 and control signal generating circuit for pixel data writing 26 generate control signals to control the writing of video data into digital memory circuit 23. The control circuit for pixel data write position 25 generates address signals for writing each respective screenful of video data in a specified address of the digital memory circuit 23 according to the vertical and horizontal synchronous signals and dot clock signals. The control signal generating circuit for pixel data writing 26 generates control signals whereby video data converted by the analog-digital conversion circuit 22 are written in the digital memory circuit 23 according to the address signals generated in the control circuit for pixel data write position 25.

Reading of the video data from the digital memory circuit 23 is controlled by a control circuit for pixel data read position 27 and control signal generating circuit for pixel data reading 28. The control circuit for pixel data read position 27 generates address signals for reading each respective screenful of video data from the digital memory circuit 23 according to the vertical and horizontal synchronous signals and dot clock signals. At this time, the address signals generated in the control circuit for pixel data read position 27 are controlled by control signals for image display position, thereby enabling the shifting of the generated address signals. The control signal generating circuit for pixel data reading 28 generates control signals whereby video data are being read from the digital memory circuit 23 according to the address signals generated in the control circuit for pixel data read position 27.

Here, when the timing of the address signals generated in the control circuit for pixel data read position 27 is the same as the timing of the address signals generated in the control circuit for pixel data write position 25, the timing of the video signals output from the digital-analog conversion circuit 24 becomes the same as the timing of the video signals inputted in the analog-digital conversion circuit 22. However, by changing the timing between the address signals generated in the control circuit for pixel data read position 27 and the address signals generated in the control circuit for pixel data write position 25, the timing of the video signals output from the digital-analog conversion circuit 24 can be changed against the timing of the video signals inputted to the analog-digital conversion circuit 22.

Thus, by controlling address signals that the control circuit for pixel data read position 27 generates, according to control signals for image display position, the timing of the red video signals output from the timing shift circuit for red video signals 21R can be shifted in the vertical and horizontal scanning directions against the red video input signals.

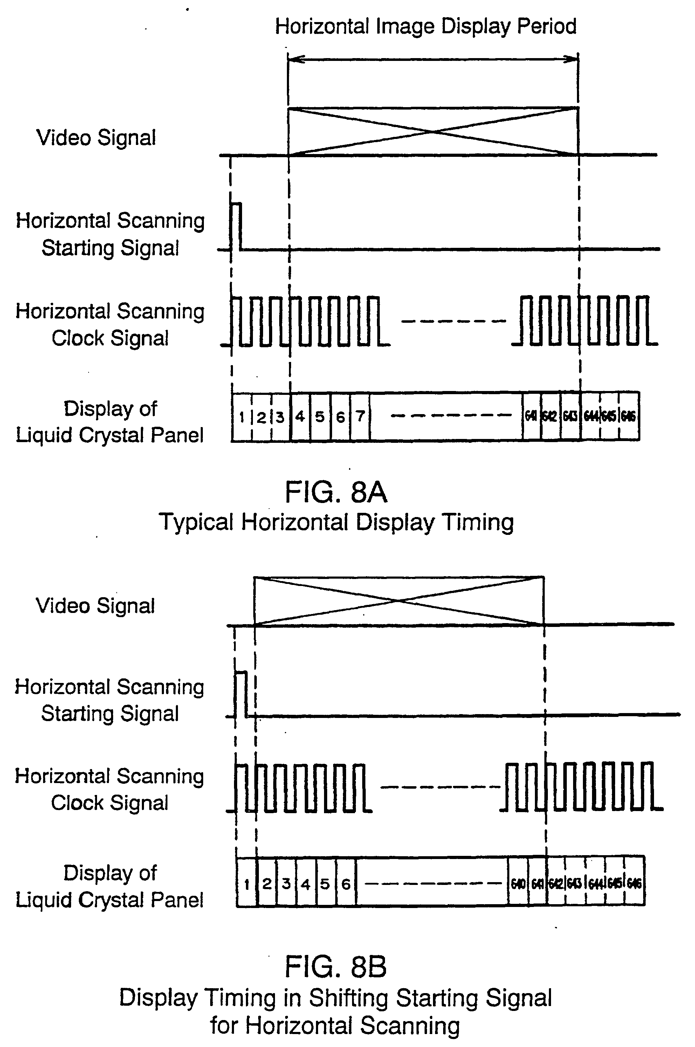

Figs. 8A and 8B show typical timing charts that describe image display timing in the horizontal scanning direction for a liquid crystal panel in order to explain how a video image projector performs in the second exemplary embodiment of the present invention.

Fig. 8(A) is a timing chart showing typical display timing in the horizontal scanning direction. With the present exemplary embodiment, the liquid crystal panel 1 has 640 pixels in the horizontal direction as the pixels for image display 3 and three pixels each on the right and left sides of the pixels for image display 3 as the redundancy pixels 4. Thus, having a total of 646 pixels horizontally as the pixels 2 of the liquid crystal panel 1. Therefore, as shown in Fig. 8(A), video image signals are applied in sequence to the pixels on the liquid crystal panel 1 starting from the 1st pixel and ending with the 646th pixel from the horizontal scanning driver circuit 6 according to the timing set by the starting signals for horizontal scanning and horizontal scanning clock signals. However, the pixels actually contributing to video image displaying are the pixels starting from the 4th pixel and ending with the 643rd pixel in the pixels for image display 3 counting 640 pixels in total. No video images are displayed on the 1st to 3rd pixels and from the 644th to 646th pixels in the redundancy pixels 4. This can be readily practised by making the video image signals that correspond to the redundancy pixels 4 become signals for displaying black color according to blanking signals and the like.

On the other hand, Fig. 8(B) is a timing chart showing horizontal display timing when the timing of video signals is shifted in the horizontal scanning direction by the timing shift circuit for video signals. Fig. 8(B) describes the state wherein video signals are advanced by a two clock period of the horizontal scanning clock signals from the timing of Fig. 8(A). In this state, video image signals are displayed on the 2nd pixel to the 641st pixel of the liquid crystal panel 1. No video image signals are displayed on the 1st pixel and the 642nd pixel to the 646th pixel. In other words, by adjusting the video signals according to the timing chart of Fig. 8(B), the positions where video images are displayed on the liquid crystal panel 1 are shifted to the left by a two pixel distance from the timing of Fig. 8(A).

The display timing in the horizontal scanning direction has only been explained above and since the same applies to the display timing in the vertical scanning directions, a detailed description thereof is omitted.

Thus, by allowing the positions of video images displayed on three liquid crystal panels of red, green and blue colors with redundancy pixels provided on each respective liquid crystal panel to be shifted independently from one another by means of electrical adjustments, convergence adjustments of the projected video images can be conducted electrically, not mechanically, in both the horizontal and vertical scanning directions. As a result, such great effects as a simplification in adjustment systems, a reduction in adjustment steps and the like can be achieved.

### Third exemplary embodiment

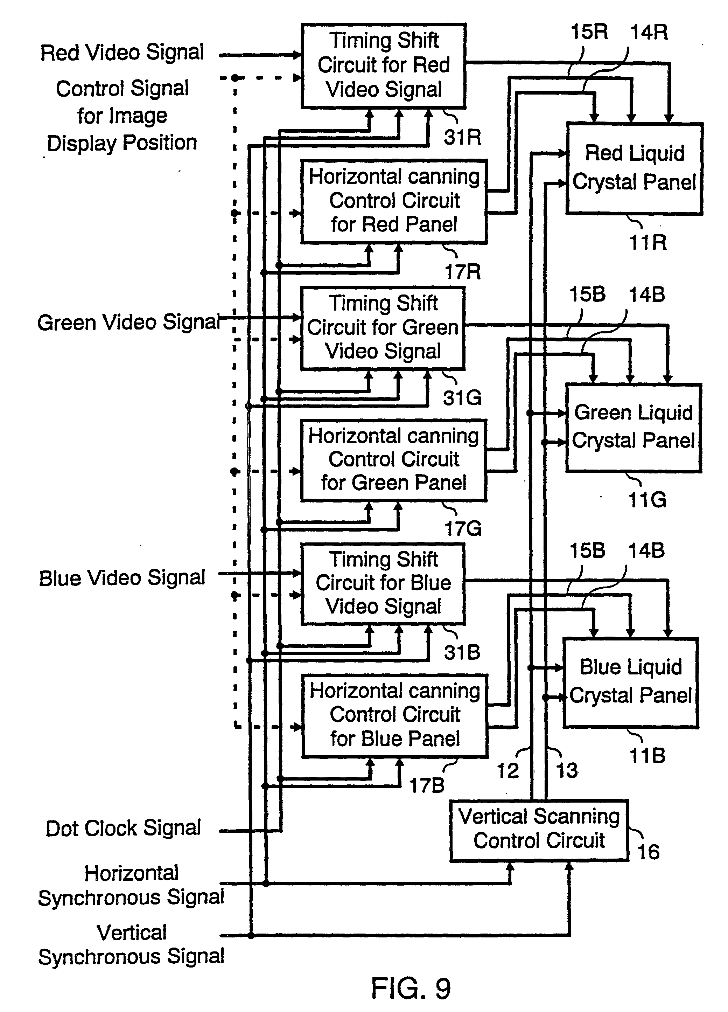

Fig. 9 is a schematic block diagram showing the structure of a video image projector in a third exemplary embodiment. Here, the same reference symbols as used in the first and second exemplary embodiments are used for the same components of the video image projector of the present exemplary embodiment and a detailed explanation of the reference symbols is omitted.

In Fig. 9, reference symbols 11R, 11G and 11B indicate a red liquid crystal panel, green liquid crystal panel and blue liquid crystal panel, respectively. Reference numeral 12 is starting signals for vertical scanning of liquid crystal panels 11R, 11G and 11B. Reference numeral 13 is vertical scanning clock signals for liquid crystal panels 11R, 11G and 11B. Reference numeral 16 is a vertical scanning control circuit to generate starting signals for vertical scanning and vertical scanning clock signals for liquid crystal panels 11R, 11G and 11B. Reference symbols 14R, 14G and 14B are starting signals for horizontal scanning of respective liquid crystal panels. Reference symbols 15R, 15G and 15B are horizontal scanning clock signals for respective liquid crystal panels. Reference symbols 17R, 17G and 17B are horizontal scanning control circuits to generate starting signals for horizontal scanning and horizontal scanning clock signals for respective liquid crystal panels. Reference symbol 31R is a timing shift circuit for the red video signal to shift the timing of the red video signal in the vertical scanning direction. Reference symbol 31G is a timing shift circuit for the green video signal to shift the timing of the green video signal in the vertical scanning direction. Reference symbol 31B is a timing shift circuit for the blue video signal to shift the timing of the blue video signal in the vertical scanning direction.

The vertical scanning control circuit 16 is composed of counter circuits and the like and generates the common starting signals for vertical scanning 12 and vertical scanning clock signals 13 with vertical synchronous signals serving as the reference signals and horizontal synchronous signals being used as clock signals in order to vertically scan the red liquid crystal panel 11R, green liquid crystal panels 11G and blue liquid crystal panels 11B.

The horizontal scanning control circuit for red liquid crystal panel 17R is composed of counter circuits and the like and generates the starting signals for horizontal scanning 14R and horizontal scanning clock signals 15R for the red liquid crystal panel 11R with horizontal synchronous signals serving as the reference signals and dot clock signals being used in order to horizontally scan the red liquid crystal panel 11R. The horizontal scanning control circuit for green liquid crystal panel 17G and horizontal scanning control circuit for blue liquid crystal panel 17B have the same structure as the horizontal scanning control circuit for red liquid crystal panel 17R has and generates the starting signals for horizontal scanning 14G and 14B and the horizontal scanning clock signals 15G and 15B, respectively.

The horizontal scanning control circuit for red liquid crystal panel 17R is controlled by control signals for image display position. According to setting values of the counter circuits, timing can be changed for the starting signals for horizontal scanning 14R and horizontal scanning clock signals 15R that are generated from the horizontal scanning control circuit for red liquid crystal panel 17R. Control signals for image display position are data signals, whereby data are provided to counter circuits of each respective control circuit, and can be generated readily by a microcomputer and the like (not shown in Fig. 9). The horizontal scanning control circuit for green liquid crystal panel 17G and horizontal scanning control circuit for blue liquid crystal panel 17B are also controlled according to the control signals for image display position. Each respective timing of the starting signals for horizontal scanning and horizontal scanning clock signals that are generated from respective control circuits can be changed independently, however, from one another.

The timing shift circuit for red video signals 31R is composed of digital memory devices and the like, and shifts the timing of the red video input signals in the vertical scanning direction according to control signals for image display position. The structure and performance of the timing shift circuit for red video signal 31R are almost the same as the timing shift circuit for red video signal 21R that was explained in the second exemplary embodiment of the present invention, so a detailed explanation thereof is omitted.

The timing shift circuit for green video signals 31G and timing shift circuit for blue video signals 31B have the same structures as the timing shift circuit for red video signals 31R, and shift the timing of the input video signals in the vertical scanning direction according to control signals for image display position. Here, all the timing of the video signals that are shifted by each respective timing shift circuit for video signals can be changed independently from one another.

As explained above, according to the present invention, positions of the images displayed on a liquid crystal panel can be shifted in the vertical scanning direction by shifting the timing of video signals and can also be shifted in the horizontal direction by shifting the timing of horizontal scanning control signals.

Thus, by allowing the positions of video images displayed on three liquid crystal panels of red. green and blue colors with redundancy pixels provided on each respective liquid crystal panel to be shifted independently from one another by means of electrical adjustments, convergence adjustments of the projected video images can be conducted electrically, not mechanically, in both the horizontal and vertical scanning directions. As a result, such great effects as a simplification in adjustment systems, a reduction in adjustment steps and the like can be achieved.

### Fourth exemplary embodiment

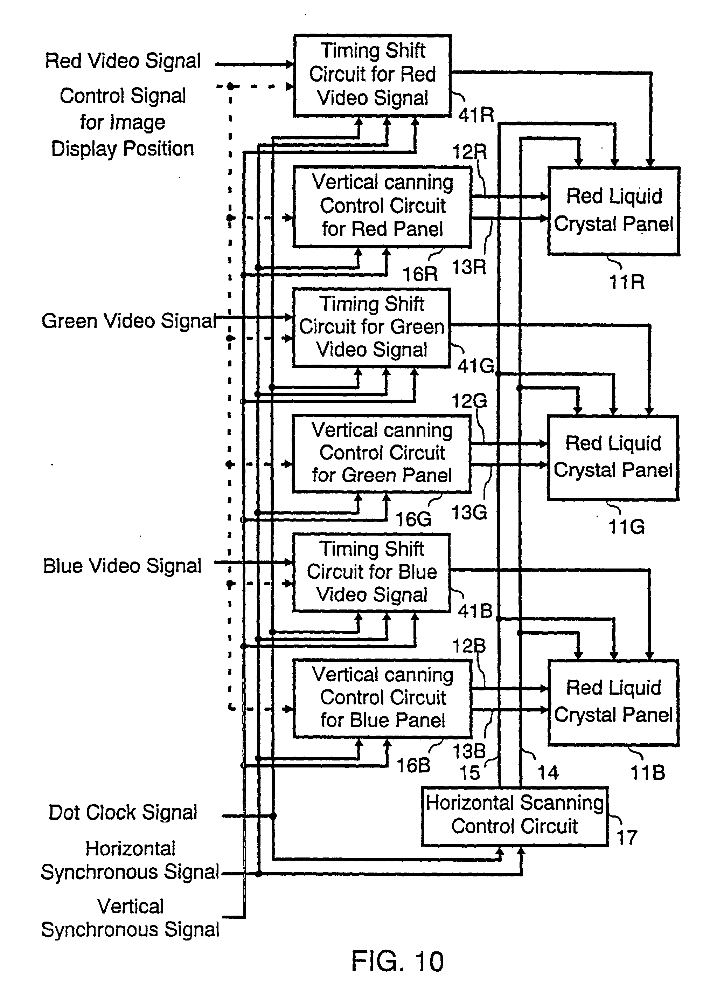

Fig. 10 is a schematic block diagram showing the structure of a video image projector in a fourth exemplary embodiment. Here, the same reference symbols as used in the first, second and third exemplary embodiments are used for the same components of the video image projector of the present exemplary embodiment and a detailed explanation of the reference symbols is omitted.

In Fig. 10, reference symbols 11R, 11G and 11B are a red liquid crystal panel, green liquid crystal panel and blue liquid crystal panel, respectively. Reference symbols 12R, 12G and 12B are starting signals for vertical scanning of respective liquid crystal panels. Reference symbols 13R, 13G and 13B are vertical scanning clock signals for respective liquid crystal panels. Reference symbols 16R, 16G and 16B are vertical scanning control circuits to generate starting signals for vertical scanning and vertical scanning clock signals for respective liquid crystal panels. Reference numeral 14 is starting signals for horizontal scanning of respective liquid crystal panels. Reference numeral 15 is horizontal scanning clock signals for respective liquid crystal panels. Reference numeral 17 is a horizontal scanning control circuit to generate starting signals for horizontal scanning and horizontal scanning clock signals for respective liquid crystal panels. Reference symbol 41R is a timing shift circuit for red video signal to shift the timing of red video signal in the horizontal scanning direction. Reference symbol 41G is a timing shift circuit for green video signal to shift the timing of green video signal in the horizontal scanning direction. Reference symbol 41B is a timing shift circuit for blue video signal to shift the timing of blue video signal in the vertical scanning direction.

The vertical scanning control circuit for red liquid crystal panel 16R is composed of counter circuits and the like and generates the starting signal for vertical scanning 12R and vertical scanning clock signal 13R with the vertical synchronous signal serving as the reference signal and horizontal synchronous signal being used as the clock signal in order to vertically scan the red liquid crystal panel 11R. The vertical scanning control circuit for green liquid crystal panel 16G and vertical scanning control circuit for blue liquid crystal panel 16B have the same structure as the vertical scanning control circuit for red liquid crystal panel 16R and generates the starting signals for vertical scanning 12G and 12B and the vertical scanning clock signals 13G and 13B, respectively.

The vertical scanning control circuit for red liquid crystal panel 16R is controlled by control signals for image display position. According to setting values of the counter circuits, timing can be changed for the starting signal for vertical scanning 12R and vertical scanning clock signal 13R that are generated. Control signals for image display position are data signals, whereby data are provided to counter circuits of each respective control circuit, and can be generated readily by a microcomputer and the like (not shown in Fig. 10). The vertical scanning control circuit for green liquid crystal panel 16G and vertical scanning control circuit for blue liquid crystal panel 16B are also controlled according to the control signals for image display position. Each respective timing of the starting signals for vertical scanning and vertical scanning clock signals that are generated from respective control circuits can be changed independently, however, from one another.

The timing shift circuit for red video signals 41R is composed of digital memory devices and the like, and shifts the timing of the red input video signals in the horizontal scanning direction according to control signals for image display position. The structure and performance of the timing shift circuit for red video signal 41R are almost the same as the timing shift circuit for red video signal 21R that was explained in the second exemplary embodiment of the present invention, so a detailed explanation thereof is omitted.

When the timing of video signals is only shifted in the horizontal scanning direction, the timing shift processing of video signals is finished within one horizontal scanning period and less expensive line memory devices can be used in a digital memory circuit 23 in contrast to the case where timing of the video signals is shifted in the vertical scanning direction, thereby resulting in a cost benefit.

The timing shift circuit for green video signals 41G and the timing shift circuit for blue video signals 41B have the same structure as the timing shift circuit for red video signals 41R, and shift the timing of the input video signals in the horizontal scanning direction according to control signals for image display position. Here, all the timing of the video signals that are shifted by each respective timing shift circuit for video signals can be changed independently from one another.

As explained above, according to the present invention, positions of the images displayed on liquid crystal panels can be shifted in the horizontal scanning direction by shifting the timing of vertical scanning control signals and also can be shifted in the horizontal direction by shifting the timing of video signals.

Thus, by allowing the positions of video images displayed on three liquid crystal panels of red, green and blue colors with redundancy pixels provided on each respective liquid crystal panel to be shifted independently from one another by means of electrical adjustments, convergence adjustments of the projected video images can be conducted electrically, not mechanically, in both the horizontal scanning and vertical scanning directions of the video images.

As a result, such great effects as a simplification in adjustment systems, a reduction in adjustment steps and the like can be achieved.

As described in the foregoing, a video image projector of the present invention has liquid crystal panels provided with redundancy pixels in addition to the pixels for image display that are normally required for image displaying and has the timing of liquid crystal panels' scanning control signals and video signals, which are input into the liquid crystal panels, shifted in performing image display by moving the positions of video images displayed on the liquid crystal panels to the pixels that include the redundancy pixels. Thereby, realizing a video image projector which allows the convergence adjustments, that have been so far conducted by moving the mounting positions of liquid crystal panels mechanically to be performed, without resorting to the mechanical method of moving the positions of liquid crystal panels.

By introducing the structures disclosed by the present invention into a video image projector employing liquid crystal panels, the liquid crystal panels are no longer required to be moved mechanically in the vertical or horizontal direction, thereby enabling simplification in an adjustment mechanism comprising a method of moving the position of the liquid crystal panels mechanically and contributing to the realization of a video image projector having a greatly simplified structure. Furthermore, electrical convergence adjustments have made it possible to automate the convergence adjustment process, contributing greatly, together with other associated factors, to the reduction of adjustment steps required in the production of video image projectors. In addition, the possibility of conducting convergence adjustments electrically extending after the completion of assembly of video image projectors provides a means of performing readjustments without disassembling the video image projectors even when the convergence becomes mis-aligned after assembly is completed. Thus, contributing to the great benefits such as a significant reduction in readjustment time and the like.

While the invention has been described with reference to exemplary embodiments, it is not limited thereto. Rather, the appended claims should be construed to include other variants and embodiments of the invention which may be made by those skilled in the art without departing from the scope of the present invention.

## Claims

1. A video image projector, for displaying a video image on a liquid crystal panel (1) for projection on a screen (64), comprising:
a liquid crystal panel (1), having a) a set of first pixels for displaying said video image at a first position (3) on said liquid crystal panel and b) additional pixels (4); and
means (16R/G/B, 17R/G/B, 21R/G/B) for shifting the position of said video image displayed on said liquid crystal panel from the first position (3) to a second position (3') on said liquid crystal panel in at least one of a vertical direction and a horizontal direction from said set of first pixels to a different set of pixels including at least some of said additional pixels (4).

2. A video image projector according to claim I wherein said additional pixels comprise at least one further pixel in each of a respective upward, downward, right and left directions; and
said means for shifting comprises means for generating and controlling
i) a vertical scanning control signal (12R/G/B, 13R/G/B) for controlling the image display in a vertical direction and
ii) a horizontal scanning control signal (14R/G/B, 15R/G/B) for controlling the image display in a horizontal direction on said liquid crystal panels such that a position of the video image displayed on said liquid crystal panel is moved from the first position to the second position.

3. A video image projector according to claim 1 wherein said additional pixels comprise at least one further pixel in each of a respective upward, downward, right and left directions; and said means for shifting comprises means (21R/G/B) for shifting a timing of the video signal corresponding to the video image on said liquid crystal panel to move a position of the video image displayed on said liquid crystal panel from the first position to the second position.

4. A video image projector according to claim 1 wherein said additional pixels comprise at least one further pixel in each of a respective upward, downward, right and left directions; and
said means for shifting comprises:
vertical moving means (16R/G/B) for moving a position of the video image displayed on said liquid crystal panel in a vertical scanning direction by generating and controlling vertical scanning control signals (16R/G/B); and
horizontal moving means for moving (17R/G/B) the position of the video image displayed on said liquid crystal panel in a horizontal scanning direction by shifting a timing of the video signal corresponding to the video image displayed on said liquid crystal panel in the horizontal scanning direction, such that the position of the video images displayed on said liquid crystal panel moves from the first position to the second position.

5. A video image projector according to claim 1 wherein said additional pixels comprise at least one further pixel in each of a respective upward, downward, right and left directions; and
said means for shifting comprises:
horizontal moving means (17R/G/B) for moving a position of the video image displayed on said liquid crystal panel in a horizontal scanning direction by generating and controlling a horizontal scanning control signals (14R/G/B, 15R/G/B); and
vertical moving means (16R/G/B) for moving the position of the video image displayed on said liquid crystal panel in a vertical scanning direction by shifting a timing of the video signal corresponding to the video image displayed on said liquid crystal panel in the vertical scanning direction, such that the position of the video image displayed on said liquid crystal panel moves from the first position to the second position.

6. A video image projector according to claim 1, wherein
said liquid crystal panel is a plurality of liquid crystal panels, each having a) a said set of first pixels for displaying said video image and b) said additional pixels in addition to said first pixels, and
said shifting means shifts said video image in at least one of said plurality of liquid crystal panels from said set of first pixels to said different set of pixels.

7. A video image projector according to claim 2, wherein
said liquid crystal panel is a plurality of liquid crystal panels, each having a) a said set of first pixels for displaying said video image and b) said additional pixels in addition to said first pixels,
said means for generating and controlling generates and controls a) respective vertical scanning control signals and b) respective horizontal scanning control signals, and
said position of said video image is moved in at least one of said plurality of liquid crystal panels from said set of first pixels to said different set of pixels.

8. A video image projector according to claim 3, wherein
said liquid crystal panel is a plurality of liquid crystal panels, each having a) a said set of first pixels for displaying said video image and b) said additional pixels in addition to said first pixels, and
said shifting means shifts the timing of said video signal in at least one of said plurality of liquid crystal panels from said set of first pixels to said different set of pixels.

9. A video image projector according to claim 4, wherein
said liquid crystal panel is a plurality of liquid crystal panels, each having a) a said set of first pixels for displaying said video image and b) said additional pixels in addition to said first pixels,
said vertical moving means moves the position of said video image in at least one of said plurality of liquid crystal panels from said first set of pixels to at least one of said additional pixels in the vertical scanning direction, and
said horizontal moving means moves the position of said video image in at least one of said plurality of liquid crystal panels from said first set of pixels to at least one of said additional pixels in the horizontal scanning direction.

10. A video image projector according to claim 5, wherein
said liquid crystal panel is a plurality of liquid crystal panels, each having a) a said set of first pixels for displaying said video image and b) said additional pixels in addition to said first pixels,
said vertical moving means moves the position of said video image in at least one of said plurality of liquid crystal panels from said first set of pixels to at least one of said additional pixels in the vertical scanning direction, and
said horizontal moving means moves the position of said video image in at least one of said plurality of liquid crystal panels from said first set of pixels to at least one of said additional pixels in the horizontal scanning direction.

## Patentansprüche

1. Videobildprojektor, der ein Videobild auf einer Flüssigkristalltafel (1) zum Projizieren auf einem Bildschirm (34) anzeigt und der umfasst:
eine Flüssigkristalltafel (1) mit a) einer Gruppe erster Pixel zum Anzeigen des Videobildes an einer ersten Position (3) auf der Flüssigkristalltafel und b) zusätzlichen Pixeln (4); und
Einrichtungen (16R/G/B, 17R/G/B, 21R/G/B) zum Verschieben der Position des auf der Flüssigkristalltafel angezeigten Bildes von der ersten Position (3) an eine zweite Position (3') auf der Flüssigkristalltafel in wenigstens einer vertikalen Richtung oder einer horizontalen Richtung von der Gruppe erster Pixel zu einer anderen Gruppe von Pixeln, die wenigstens einige der zusätzlichen Pixel (4) enthalten.

2. Videobildprojektor nach Anspruch 1, wobei die zusätzlichen Pixel wenigstens ein weiteres Pixel jeweils in der Aufwärts-, Abwärts-, Rechts- und Links-Richtung umfassen; und
wobei die Einrichtung zum Verschieben eine Einrichtung umfasst, die erzeugt und steuert:
1) ein Vertikalabtast-Steuersignal (12R/G/B, 13R/G/B), das die Bildanzeige in einer vertikalen Richtung steuert, und
2) ein Horizontalabtast-Steuersignal (14 R/G/B, 15 R/G/B), das die Bildanzeige in einer horizontalen Richtung auf der Flüssigkristalltafel steuert, so dass eine Position des Videobildes, das auf der Flüssigkristalltafel angezeigt wird, von der ersten Position an die zweite Position bewegt wird.

3. Videobildprojektor nach Anspruch 1, wobei die zusätzlichen Pixel wenigstens ein weiteres Pixel jeweils in der Aufwärts-, Abwärts-, Rechts- und Links-Richtung umfassen und die Einrichtung zum Verschieben eine Einrichtung (21 R/G/B) umfasst, die eine Zeitfolge des Videosignals, das dem Videobild auf der Flüssigkristalltafel entspricht, so verschiebt, dass eine Position des auf der Flüssigkristalltafel angezeigten Videobildes von der ersten Position an die zweite Position bewegt wird.

4. Videobildprojektor nach Anspruch 1, wobei die zusätzlichen Pixel wenigstens ein weiteres Pixel jeweils in der Aufwärts-, Abwärts-, Rechts- und Links-Richtung umfassen; und
die Einrichtung zum Verschieben umfasst:
eine Vertikalbewegungseinrichtung (16 R/G/B), die eine Position des auf der Flüssigkristalltafel angezeigten Videobildes in einer Vertikalabtastrichtung bewegt, indem sie Vertikalabtast-Steuersignale (16 R/G/B) erzeugt und steuert; und
eine Horizontalbewegungseinrichtung, die die Position des auf der Flüssigkristalltafel angezeigten Videobildes in einer Horizontalabtastrichtung bewegt, indem sie eine Zeitfolge des Videosignals, das dem auf der Flüssigkristalltafel angezeigten Videobild entspricht, in der Horizontalabtastrichtung so verschiebt, dass sich die Position der auf der Flüssigkristalltafel angezeigten Videobilder von der ersten Position an die zweite Position bewegt.

5. Videobildprojektor nach Anspruch 1, wobei die zusätzlichen Pixel wenigstens ein weiteres Pixel jeweils in der Aufwärts-, Abwärts-, Rechts- und Links-Richtung umfassen; und
wobei die Einrichtung zum Verschieben umfasst:
eine Horizontalbewegungseinrichtung (17 R/G/B), die eine Position des auf der Flüssigkristalltafel angezeigten Videobildes in einer Horizontalabtastrichtung bewegt, indem sie Horizontalabtast-Steuersignale (14 R/G/B, 15 R/G/B) erzeugt und steuert; und
eine Vertikalbewegungseinrichtung (16 R/G/B), die die Position des auf der Flüssigkristalltafel angezeigten Videobildes in einer Vertikalabtastrichtung bewegt, indem sie eine Zeitfolge des Videosignals, das dem auf der Flüssigkristalltafel angezeigten Videobild entspricht, in der Vertikalabtastrichtung so verschiebt, dass sich die Position des auf der Flüssigkristalltafel angezeigten Videobildes von der ersten Position an die zweite Position bewegt.

6. Videobildprojektor nach Anspruch 1, wobei:
es sich bei der Flüssigkristalltafel um eine Vielzahl von Flüssigkristalltafeln handelt, die jeweils a) die Gruppe erster Pixel zum Anzeigen des Videobildes und b) die zusätzlichen Pixel zusätzlich zu den ersten Pixeln aufweisen, und
die Verschiebeeinrichtung das Videobild auf wenigstens einer der Vielzahl von Flüssigkristalltafeln von der Gruppe erster Pixel zu einer anderen Gruppe von Pixeln verschiebt.

7. Videobildprojektor nach Anspruch 2, wobei:
es sich bei der Flüssigkristalltafel um eine Vielzahl von Flüssigkristalltafeln handelt, die jeweils a) die Gruppe erster Pixel zum Anzeigen des Videobildes und b) die zusätzlichen Pixel zusätzlich zu den ersten Pixeln aufweisen,
wobei die Einrichtung zum Erzeugen und Steuern a) entsprechende Vertikalabtast-Steuersignale und b) entsprechende Horizontalabtast-Steuersignale erzeugt und steuert; und
die Position des Videobildes auf wenigstens einer der Vielzahl von Flüssigkristalltafeln von der Gruppe erster Pixel zu der anderen Gruppe von Pixeln bewegt wird.

8. Videobildprojektor nach Anspruch 3, wobei:
es sich bei der Flüssigkristalltafel um eine Vielzahl von Flüssigkristalltafeln handelt, die jeweils a) die Gruppe erster Pixel zum Anzeigen des Videobildes und b) die zusätzlichen Pixel zusätzlich zu den ersten Pixeln aufweisen, und
die Verschiebeeinrichtung die Zeitfolge des Videosignals auf wenigstens einer der Vielzahl von Flüssigkristalltafeln von der Gruppe erster Pixel zu der anderen Gruppe von Pixeln verschiebt.

9. Videobildprojektor nach Anspruch 4, wobei:
es sich bei der Flüssigkristalltafel um eine Vielzahl von Flüssigkristalltafeln handelt, die jeweils a) die Gruppe erster Pixel zum Anzeigen des Videobildes und b) die zusätzlichen Pixel zusätzlich zu den ersten Pixeln aufweisen,
die Vertikalbewegungseinrichtung die Position des Videobildes auf wenigstens einer der Vielzahl von Flüssigkristalltafeln von der ersten Gruppe von Pixeln zu wenigstens einem der zusätzlichen Pixel in der Vertikalabtastrichtung bewegt, und
die Horizontalbewegungseinrichtung die Position des Videobildes auf wenigstens einer der Vielzahl von Flüssigkristalltafeln von der ersten Gruppe von Pixeln zu wenigstens einem der zusätzlichen Pixel in der Horizontalabtastrichtung bewegt.

10. Videobildprojektor nach Anspruch 5, wobei:
es sich bei der Flüssigkristalltafel um eine Vielzahl von Flüssigkristalltafeln handelt, die jeweils a) die Gruppe erster Pixel zum Anzeigen des Videobildes und b) die zusätzlichen Pixel zusätzlich zu den ersten Pixeln aufweisen,
die Vertikalbewegungseinrichtung die Position des Videobildes auf wenigstens einer der Vielzahl von Flüssigkristalltafeln von der ersten Gruppe von Pixeln zu wenigstens einem der zusätzlichen Pixel in der Vertikalabtastrichtung verschiebt, und
die Horizontalbewegungseinrichtung die Position des Videobildes auf wenigstens einer der Vielzahl von Flüssigkristalltafeln von der ersten Gruppe von Pixeln zu wenigstens einem der zusätzlichen Pixel in der Horizontalabtastrichtung verschiebt.

## Revendications

1. Projecteur d'image vidéo, pour afficher une image vidéo sur un panneau à cristaux liquides (1) pour une projection sur un écran (64), comprenant :
un panneau à cristaux liquides (1) qui comporte a) un jeu de premiers pixels pour afficher ladite image vidéo en une première position (3) sur ledit panneau à cristaux liquides et b) des pixels additionnels (4) ; et
un moyen (16R/G/B, 17R/G/B, 21R/G/B) pour décaler la position de ladite image vidéo qui est affichée sur ledit panneau à cristaux liquides depuis la première position (3) jusqu'à une seconde position (3') sur ledit panneau à cristaux liquides suivant au moins une direction prise parmi une direction verticale et une direction horizontale depuis ledit jeu de premiers pixels jusqu'à un jeu différent de pixels incluant au moins certains desdits pixels additionnels (4).

2. Projecteur d'image vidéo selon la revendication 1, dans lequel :
lesdits pixels additionnels comprennent au moins un pixel supplémentaire suivant chacune de directions respectives vers le haut, vers le bas, vers la droite et vers la gauche ; et
ledit moyen de décalage comprend un moyen pour générer et commander
i) un signal de commande de balayage vertical (12R/G/B, 13R/G/B) pour commander l'affichage d'image suivant une direction verticale ; et
ii) un signal de commande de balayage horizontal (14R/G/B, 15R/G/B) pour commander l'affichage d'image suivant une direction horizontale sur ledit panneau à cristaux liquides de telle sorte qu'une position de l'image vidéo qui est affichée sur ledit panneau à cristaux liquides soit déplacée depuis la première position jusqu'à la seconde position.

3. Projecteur d'image vidéo selon la revendication 1, dans lequel lesdits pixels additionnels comprennent au moins un pixel supplémentaire suivant chacune de directions respectives vers le haut, vers le bas, vers la droite et vers la gauche ; et ledit moyen de décalage comprend un moyen (21R/G/B) pour décaler un cadencement du signal vidéo correspondant à l'image vidéo sur ledit panneau à cristaux liquides afin de déplacer une position de l'image vidéo qui est affichée sur le panneau à cristaux liquides depuis la première position jusqu'à la seconde position.

4. Projecteur d'image vidéo selon la revendication 1, dans lequel :
lesdits pixels additionnels comprennent au moins un pixel supplémentaire suivant chacune de directions respectives vers le haut, vers le bas, vers la droite et vers la gauche ; et
ledit moyen de décalage comprend :
un moyen de déplacement vertical (16R/G/B) pour déplacer une position de l'image vidéo qui est affichée sur ledit panneau à cristaux liquides suivant une direction de balayage vertical en générant et en commandant des signaux de commande de balayage vertical (16R/G/B) ; et
un moyen de déplacement horizontal (17R/G/B) pour déplacer la position de l'image vidéo qui est affichée sur ledit panneau à cristaux liquides suivant une direction de balayage horizontal en décalant un cadencement du signal vidéo correspondant à l'image vidéo qui est affichée sur ledit panneau à cristaux liquides suivant la direction de balayage horizontal de telle sorte que la position des images vidéo qui sont affichées sur ledit panneau à cristaux liquides se déplace depuis la première position jusqu'à la seconde position.

5. Projecteur d'image vidéo selon la revendication 1, dans lequel:
lesdits pixels additionnels comprennent au moins un pixel supplémentaire suivant chacune de directions respectives vers le haut, vers le bas, vers la droite et vers la gauche ; et
ledit moyen de décalage comprend :
un moyen de déplacement horizontal (17R/G/B) pour déplacer une position de l'image vidéo qui est affichée sur ledit panneau à cristaux liquides suivant une direction de balayage horizontal en générant et en commandant des signaux de commande de balayage horizontal (14R/G/B, 15R/G/B) ; et
un moyen de déplacement vertical (16R/G/B) pour déplacer la position de l'image vidéo qui est affichée sur ledit panneau à cristaux liquides suivant une direction de balayage horizontal en décalant un cadencement du signal vidéo correspondant à l'image vidéo qui est affichée sur ledit panneau à cristaux liquides suivant la direction de balayage vertical de telle sorte que la position de l'image vidéo qui est affichée sur ledit panneau à cristaux liquides se déplace depuis la première position jusqu'à la seconde position.

6. Projecteur d'image vidéo selon la revendication 1, dans lequel :
ledit panneau à cristaux liquides est une pluralité de panneaux à cristaux liquides dont chacun comporte a) un dit jeu de premiers pixels pour afficher ladite image vidéo et b) lesdits pixels additionnels en plus desdits premiers pixels ; et
ledit moyen de décalage décale ladite image vidéo dans au moins un de ladite pluralité de panneaux à cristaux liquides depuis ledit jeu de premiers pixels jusqu'audit jeu différent de pixels.

7. Projecteur d'image vidéo selon la revendication 2, dans lequel :
ledit panneau à cristaux liquides est une pluralité de panneaux à cristaux liquides dont chacun comporte a) un dit jeu de premiers pixels pour afficher ladite image vidéo et b) lesdits pixels additionnels en plus desdits premiers pixels ;
ledit moyen pour générer et commander génère et commande a) des signaux de commande de balayage vertical respectifs et b) des signaux de commande de balayage horizontal respectifs ; et
ladite position de ladite image vidéo est déplacée dans au moins l'un de ladite pluralité de panneaux à cristaux liquides depuis ledit jeu de premiers pixels jusqu'audit jeu différent de pixels.

8. Projecteur d'image vidéo selon la revendication 3, dans lequel :
ledit panneau à cristaux liquides est une pluralité de panneaux à cristaux liquides dont chacun comporte a) un dit jeu de premiers pixels pour afficher ladite image vidéo et b) lesdits pixels additionnels en plus desdits premiers pixels ; et
ledit moyen de décalage décale le cadencement dudit signal vidéo dans au moins l'un de ladite pluralité de panneaux à cristaux liquides depuis ledit jeu de premiers pixels jusqu'audit jeu différent de pixels.

9. Projecteur d'image vidéo selon la revendication 4, dans lequel :
ledit panneau à cristaux liquides est une pluralité de panneaux à cristaux liquides dont chacun comporte a) un dit jeu de premiers pixels pour afficher ladite image vidéo et b) lesdits pixels additionnels en plus desdits premiers pixels ;
ledit moyen de déplacement vertical déplace la position de ladite image vidéo dans au moins l'un de ladite pluralité de panneaux à cristaux liquides depuis ledit premier jeu de pixels jusqu'à au moins l'un desdits pixels additionnels suivant la direction de balayage vertical ; et
ledit moyen de déplacement horizontal déplace la position de ladite image vidéo dans au moins l'un de ladite pluralité de panneaux à cristaux liquides depuis ledit premier jeu de pixels jusqu'à au moins l'un desdits pixels additionnels suivant la direction de balayage horizontal.

10. Projecteur d'image vidéo selon la revendication 5, dans lequel :
ledit panneau à cristaux liquides est une pluralité de panneaux à cristaux liquides dont chacun comporte a) un dit jeu de premiers pixels pour afficher ladite image vidéo et b) lesdits pixels additionnels en plus desdits premiers pixels ;
ledit moyen de déplacement vertical déplace la position de ladite image vidéo dans au moins l'un de ladite pluralité de panneaux à cristaux liquides depuis ledit premier jeu de pixels jusqu'à au moins l'un desdits pixels additionnels suivant la direction de balayage vertical ; et
ledit moyen de déplacement horizontal déplace la position de ladite image vidéo dans au moins l'un de ladite pluralité de panneaux à cristaux liquides depuis ledit premier jeu de pixels jusqu'à au moins l'un desdits pixels additionnels suivant la direction de balayage horizontal.
